(19) Europäisches Patentamt

European Patent Office

Office européen des brevets

(11) **EP 0 787 983 A1**

(12) **EUROPÄISCHE PATENTANMELDUNG**

(43) Veröffentlichungstag:
06.08.1997 Patentblatt 1997/32

(51) Int. Cl.⁶: **G01N 19/10**

(21) Anmeldenummer: 96810616.1

(22) Anmeldetag: 17.09.1996

(84) Benannte Vertragsstaaten:
**CH DE FR GB LI**

(30) Priorität: **01.02.1996 CH 259/96**

(71) Anmelder: **Fr. Sauter AG**
**Fabrik elektr. Apparate**
**CH-4016 Basel (CH)**

(72) Erfinder: **Bächtold, Alain**
**68300 Saint-Louis (FR)**

(74) Vertreter: **Ullrich, Gerhard, Dr. et al**
**A. Braun, Braun Héritier Eschmann AG**
**Holbeinstrasse 36-38**
**4051 Basel (CH)**

(54) **Temperaturkompensierter Feuchtesensor**

(57) Ein Feuchtesensor umfasst einen Übersetzungshebel (3), der an einem Gehäuse (1) drehbar angebracht ist, und einen Kompensationsstab (2), dessen eines Ende mit dem Gehäuse (1) und dessen anderes Ende in einem ersten Abstand (b) von der Drehachse (30) des Übersetzungshebels (3) mit diesem verbunden ist. Das eine Ende eines innerhalb des Gehäuses (1) angeordneten, gespannten faden- oder bandförmigen Messelements (4), dessen Länge von der relativen Feuchtigkeit abhängt, ist in einem zweiten Abstand (a) von der Drehachse (30) des Übersetzungshebels (3) mit diesem verbunden. Das Material des Kompensationsstabes (2) und das Verhältnis der beiden Abstände (a, b) sind so gewählt, dass die Längenänderungen des Messelements (4), des Gehäuses (1) und eventueller weiterer intervenierender Teile (5) aufgrund einer Temperaturänderung durch die Längenänderung des Kompensationsstabes (2) und die sich daraus ergebende Drehung des Übersetzungshebels (3) kompensiert werden.

FIG.1

## Beschreibung

Die vorliegende Erfindung bezieht sich auf einen Feuchtesensor mit einem an einem Träger angeordneten, gespannten faden- oder bandförmigen Messelement, dessen Länge von der relativen Feuchtigkeit abhängt, und einen Feuchteregler, der einen solchen Feuchtesensor umfasst.

Als mechanisches Messelement ist gespanntes Menschenhaar seit langem bekannt. In regeltechnischen Anwendungen werden aber Menschenhaare wegen hohen Wartungsaufwandes für Regenerierung und Nachjustierung fast nicht mehr verwendet. Gespannte Baumwollfäden galten lange Zeit als optimaler Ersatz für Menschenhaare in Feuchtesensoren und -reglern. Jedoch hat sich die auftretende Nullpunktwanderung von einigen Prozent r.F./Jahr, die bei hoher Feuchtigkeit noch weit grösser sein kann, als nachteilig erwiesen.

In den letzten Jahren ist es gelungen, gespannte Nylonfäden, die durch verschiedene Stabilisierungsprozeduren auch bei hoher Feuchtigkeit nur noch eine geringe Nullpunktwanderung aufweisen, als Messelemente zu verwenden. Durch Ersetzen der Einzelfäden durch gewobene Nylonbänder konnte die Produktion der Messelemente wesentlich vereinfacht werden. Da Nylon bei gleicher Länge bei einer Änderung der relativen Feuchtigkeit eine um ca. 100 % grössere Längenänderung erfährt als Baumwolle, würde es sich im Prinzip als Messelement besser eignen, wenn es bei Temperaturänderungen nicht eine grössere Längenänderung erfahren würde als Baumwolle. Ein Messelement aus Baumwolle weist jedoch einen Temperaturlängenausdehnungskoeffizienten von 0,15 %r.F./K auf, während der Temperaturlängenausdehnungskoeffizient von Nylon 0,4 %r.F./K beträgt. Bei Aussentemperaturschwankungen von 60 K ergibt dies beim Nylon-Messelement Istwertschwankungen von ca. 24 %r.F. und beim Baumwolle-Messelement von ca. 9 %r.F., was zwar deutlich besser, aber für viele Anwendungen ebenfalls ungenügend ist.

Generell führt bei den bisher bekannten Feuchtesensoren und -reglern der eingangs erwähnten Art die Temperaturabhängigkeit des Messelements bei Temperaturschwankungen zu verfälschten Istwerten der relativen Feuchtigkeit.

Der Erfindung liegt daher die Aufgabe zugrunde, einen Feuchtesensor bzw. einen Feuchteregler der eingangs erwähnten Art zu schaffen, bei dem die gemessenen Istwerte der relativen Feuchtigkeit durch die Umgebungstemperatur nicht oder zumindest nur vernachlässigbar beeinflusst werden. Zudem sollen die Gestehungskosten des Feuchtesensors bzw. -reglers möglichst niedrig sein und er soll bei einem geringen Wartungsaufwand eine lange Lebensdauer haben.

Diese Aufgabe wird durch den erfindungsgemässen Feuchtesensor bzw. -regler gelöst, wie er im unabhängigen Patentanspruch 1 bzw. 10 definiert ist. Bevorzugte Ausführungsvarianten ergeben sich aus den abhängigen Patentansprüchen 2 bis 9.

Das Wesen der Erfindung besteht darin, dass ein Feuchtesensor einen Übersetzungshebel umfasst, der an einem Träger drehbar angebracht ist, und einen Kompensationsstab, dessen eines Ende mit dem Träger und dessen anderes Ende in einem ersten Abstand von der Drehachse des Übersetzungshebels mit diesem verbunden ist. Das eine Ende eines am Träger angeordneten, gespannten faden- oder bandförmigen Messelements, dessen Länge von der relativen Feuchtigkeit abhängt, ist in einem zweiten Abstand von der Drehachse des Übersetzungshebels mit diesem verbunden. Das Material des Kompensationsstabes und das Verhältnis der beiden Abstände sind so gewählt, dass die Längenänderungen des Messelements, des Trägers und eventueller weiterer intervenierender Teile aufgrund einer Temperaturänderung durch die Längenänderung des Kompensationsstabes und die sich daraus ergebende Drehung des Übersetzungshebels kompensiert werden.

Dank dem erfindungsgemässen Feuchtesensor ist es nun möglich, bei der Messung der relativen Feuchtigkeit den Temperatureinfluss auf einfache Weise zu eliminieren.

Im folgenden wird der erfindungsgemässe Feuchtesensor unter Bezugnahme auf die beigefügten Zeichnungen und anhand von Ausführungsbeispielen detaillierter beschrieben. Es zeigen:

Fig. 1 - eine Schnittansicht des Fühlerteils eines bevorzugten Ausführungsbeispiels des erfindungsgemässen Feuchtesensors und

Fig. 2a - 2d - schematisch einige weitere mögliche Anordnungen des Messelements, des Übersetzungshebels und des Kompensationsstabes des Feuchtesensors.

### Fig. 1

Der Fühlerteil weist als Träger ein Gehäuse 1 auf, das einen rohrförmigen, mit Luftdurchlässen 15 versehenen Gehäuseteil 19 umfasst, einen Abschlussdeckel 10, der das eine Ende des Gehäuseteils 19 verschliesst, und einen Gehäuseteil 18, der den Abschluss des Gehäuseteils 19 auf der dem Abschlussdeckel 10 gegenüberliegenden Seite bildet. Der Abschlussdeckel 10 wird durch eine nicht dargestellte Querfeder, die in einer Aussparung 17 angeordnet ist, im Rohrende gehalten. Ausserdem weist der Abschlussdeckel 10 eine Öffnung 16 auf, durch die hindurch mittels eines Stiftes bei der Montage des Fühlerteils notwendige Einstellungen vorgenommen werden können.

Ein Übersetzungshebel 3 ist über eine senkrecht zur Längsrichtung des rohrförmigen Gehäuseteils 19 (Rohrlängsrichtung) angeordnete Drehachse 30 drehbar am Abschlussdeckel 10 angebracht.

Das eigentliche Messelement 4 ist bandförmig ausgebildet und in Rohrlängsrichtung aufgespannt. Das eine Ende des Messelements 4 ist am der Drehachse 30 gegenüberliegenden Ende des Übersetzungshebels 3 in einem Abstand a von der Drehachse 30 eingehängt, während das andere Ende an einem Ende eines Übertragungsstabes 5 befestigt ist, der sich ebenfalls in Rohrlängsrichtung erstreckt und durch eine Öffnung 50 hindurch aus dem Gehäuse 1 herausragt. Senkrecht zum Übertragungsstab 5 ist ein Übertragungshebel 6 angeordnet, dessen eines Ende zwischen einer Spannfeder 7 und einer Schraubenmutter 8 eingeklemmt ist. Die Spannfeder 7 stützt sich auf den Gehäuseteil 18 ab und übt auf den Übertragungshebel 6 und damit indirekt auch auf den Übertragungsstab 5 eine in Rohrlängsrichtung vom Gehäuse 1 wegwirkende Kraft aus.

In einem Abstand b von der Drehachse 30 ist das eine Ende eines Kompensationsstabes 2 drehbar am Übersetzungshebel 3 befestigt. Das andere Ende des Kompensationsstabes 2 ist kegelförmig ausgebildet und in einem ebenfalls kegelförmigen Pfannenlager 26 einer Gewindespindel 25 gelagert. Die Gewindespindel 25 ist in den Gehäuseteil 18 eingeschraubt und dient der Einstellung des Sollwerts. Sie hat bei der Temperaturkompensation keine Funktion. Durch die Spannfeder 7 wird über den Übertragungsstab 5 und das Messelement 4 ein Drehmoment auf den Übersetzungshebel 3 ausgeübt. Dadurch wird das kegelförmige Ende des Kompensationsstabes 2 in das Pfannenlager 26 gedrückt.

Bei einer Änderung der relativen Feuchtigkeit bei konstanter Temperatur ändert sich die Länge $L_M$ des Messelements 4 und das festgeklemmte Ende des Übertragungshebels 6 wird bei Verkürzung des Messelements 4 in Rohrlängsrichtung gegen das Gehäuseteil 18 gezogen und bei Verlängerung durch die Spannfeder 7 von diesem weggestossen.

Bei einer Temperaturänderung ändern sich die Längen des Messelements 4, des Übertragungsstabes 5, des Kompensationsstabes 2 und des Gehäuses 1 proportional zu den jeweiligen Temperaturlängenausdehnungskoeffizienten. Das Verhältnis der Abstände a, b wird so gewählt, dass diese Längenänderungen durch Drehen des Übersetzungshebels 3 gegenseitig kompensiert werden.

Beispielsweise ergibt sich bei einem Übertragungsstab 5 und einem Gehäuse 1 aus demselben Kunststoff mit einem Temperaturlängenausdehnungskoeffizienten $\alpha_G$, einem Messelement 4 aus Nylon mit einem negativen Temperaturlängenausdehnungskoeffizienten $\alpha_M$, und einem Kompensationsstab 2 aus Invarstahl mit einem Temperaturlängenausdehnungskoeffizienten $\alpha_K$ und in Rohrlängsrichtung aktiven, für die Temperaturkompensation zu berücksichtigenden Längen $L_G$ für das Gehäuse 1 und den Kompensationsstab 2, $L_M$ für das Messelement 4 und $L_U$ für den Übertragungsstab 5 das folgende Verhältnis der beiden Abstände a, b:

$$\frac{a}{b} = \frac{\alpha_K \cdot L_G - \alpha_G \cdot L_U - \alpha_M \cdot L_M}{(\alpha_G - \alpha_K) L_G} + 1$$

Fig. 2a - 2d

Je nach Temperaturlängenausdehnungskoeffizienten $\alpha_G$, $\alpha_M$ und $\alpha_K$ können Messelement, Übersetzungshebel und Kompensationsstab unterschiedlich angeordnet werden.

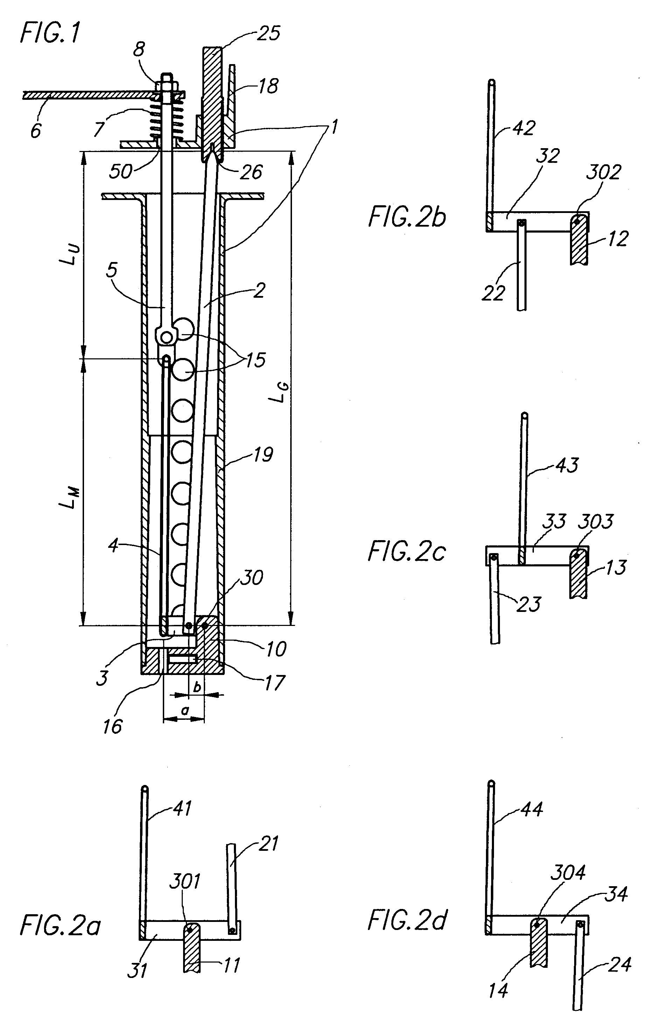

Das in Fig. 2a dargestellte Ausführungsbeispiel weist einen zweiarmigen Übersetzungshebel 31 auf, der über eine Drehachse 301 an einem Trägerteil 11 befestigt ist. Ein Messelement 41 ist beim einen Arm des Übersetzungshebels 31 eingehängt, während ein Kompensationsstab 21 am anderen Arm drehbar befestigt ist.

Bei den Ausführungsbeispielen gemäss den Fig. 2b und 2c erstrecken sich ein Messelement 42 bzw. 43 und ein Kompensationsstab 22 bzw. 23 auf entgegengesetzte Seiten eines Übersetzungshebels 32 bzw. 33. Mit 12 bzw. 13 ist ein Trägerteil und mit 302 bzw. 303 die Drehachse des Übersetzungshebels 32 bzw. 33 bezeichnet.

Das in Fig. 2d dargestellte Ausführungsbeispiel weist wiederum einen zweiarmigen Übersetzungshebel 34 auf, der über eine Drehachse 304 an einem Trägerteil 14 befestigt ist. Ein Messelement 44 ist beim einen Arm des Übersetzungshebels 34 eingehängt, während ein Kompensationsstab 24 am anderen Arm drehbar befestigt ist. Das Messelement 44 und der Kompensationsstab 24 erstrecken sich auf entgegengesetzte Seiten des Übersetzungshebels 34.

Die in den Fig. 2a - 2d dargestellten Ausführungsbeispiele weisen vorteilhafterweise auch Übertragungsstäbe auf. Die Übertragungsstäbe sind aber nicht unbedingt notwendig.

## Patentansprüche

1. Feuchtesensor mit einem an einem Träger (1) angeordneten, gespannten faden- oder bandförmigen Messelement (4, 41 bis 44), dessen Länge von der relativen Feuchtigkeit abhängt, dadurch gekennzeichnet, dass er einen Übersetzungshebel (3, 31 bis 34) umfasst, der am Träger (1) drehbar angebracht ist, und einen Kompensationsstab (2, 21 bis 24), dessen eines Ende mit dem Träger (1) und dessen anderes Ende in einem ersten Abstand (b) von der Drehachse (30, 301 bis 302) des Übersetzungshebels (3, 31 bis 34) mit diesem verbunden ist, und dass das eine Ende des gespannten Messelements (4, 41 bis 44) in einem zweiten Abstand (a) von der Drehachse (30, 301 bis 302) des Übersetzungshebels (3, 31 bis 34) mit diesem verbunden ist, wobei das Material des Kompensationsstabes (2, 21 bis 24) und das Verhältnis der beiden Abstände (a, b) so gewählt sind, dass die Längenänderungen des Messelements (4, 41 bis 44), des Trägers (1) und eventueller weiterer intervenierender Teile (5) aufgrund einer Temperaturänderung durch die Längenänderung des Kompensationsstabes (2, 21 bis 24) und die sich daraus ergebende Drehung des Übersetzungshebels (3, 31 bis 34) kompensiert werden.

2. Feuchtesensor nach Anspruch 1, dadurch gekennzeichnet, dass das andere Ende des Messelements (4, 41 bis 44) mit dem einen Ende eines Übertragungsstabes (5) verbunden ist, über den eine nicht kompensierte Längenänderung des Messelements (4, 41 bis 44) auf eine Messmechanik übertragen wird.

3. Feuchtesensor nach Anspruch 1 oder 2, dadurch gekennzeichnet, dass der Kompensationsstab (2, 21 bis 24) mit dem Träger (1) so verbunden ist, dass er zur Kalibrierung in Richtung des Übersetzungshebels (3, 31 bis 34) und in Gegenrichtung verschiebbar ist.

4. Feuchtesensor nach Anspruch 3, dadurch gekennzeichnet, dass die Verbindung des Kompensationsstabes (2, 21 bis 24) mit dem Träger (1) mittels einer Gewindespindel (25) erfolgt, die im Träger (1) verstellbar eingeschraubt ist.

5. Feuchtesensor nach einem der Ansprüche 1 bis 4, dadurch gekennzeichnet, dass der Kompensationsstab (2) aus einem Material besteht, dessen Temperaturlängenausdehnungskoeffizient $\alpha_K$ grösser als der Temperaturlängenausdehnungskoeffizient $\alpha_M$ des Messelements (4), aber kleiner als der Temperaturlängenausdehnungskoeffizient $\alpha_G$ des Trägers (1) ist, und ungefähr parallel zum Messelement (4) auf derselben Seite des Übersetzungshebels (3) so angeordnet ist, dass der genannte erste Abstand (b) kleiner ist als der genannte zweite Abstand (a).

6. Feuchtesensor nach einem der Ansprüche 1 bis 5, dadurch gekennzeichnet, dass der Träger ein Gehäuse (1) ist, das die allgemeine Form eines mit Luftdurchlässen (15) versehenen Rohres hat, der Übersetzungshebel (3) im Bereich des einen Rohrendes angebracht ist und das Messelement (4) und der Kompensationsstab (2) sich vom Übersetzungshebel (3) weg in Richtung des anderen Rohrendes erstrecken.

7. Feuchtesensor nach einem der Ansprüche 1 bis 6, dadurch gekennzeichnet, dass das Messelement (4, 41 bis 44) am Übersetzungshebel (3, 31 bis 34) eingehängt ist.

8. Feuchtesensor nach einem der Ansprüche 1 bis 7, dadurch gekennzeichnet, dass das Messelement (4, 41 bis 44) aus einem Nylonband und/oder der Träger (1) aus Kunststoff besteht.

9. Feuchtesensor nach einem der Ansprüche 1 bis 8, dadurch gekennzeichnet, dass der Kompensationsstab (2) aus Invarstahl besteht.

10. Feuchteregler mit einem Feuchtesensor nach einem der Ansprüche 1 bis 9.

FIG.1

FIG.2b

FIG.2c

FIG.2a

FIG.2d

Europäisches
Patentamt

**EUROPÄISCHER RECHERCHENBERICHT**

Nummer der Anmeldung

EP 96 81 0616

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US 2 528 018 A (STEWART FREDERICK C) 31.Oktober 1950 * Spalte 3, Zeile 50 - Spalte 4, Zeile 6; Abbildungen * --- | 1,2 | G01N19/10 |
| A | US 2 153 425 A (MATTHEWS ALBERT T ET AL) 4.April 1939 * das ganze Dokument * --- | 1,2 | |
| A | US 2 961 164 A (NEWELL FLOYD B) 22.November 1960 * Spalte 4, Zeile 42 - Spalte 7, Zeile 47 * --- | 1 | |
| A | US 2 866 023 A (BOOTH RUSSELL N) 23.Dezember 1958 * Spalte 1, Zeile 67 - Spalte 2, Zeile 71 * --- | 1 | |
| A | US 3 662 601 A (STRONG ROGER K) 16.Mai 1972 * Spalte 1, Zeile 68 - Spalte 2, Zeile 17 * --- | 1 | **RECHERCHIERTE SACHGEBIETE (Int.Cl.6)** G01N |
| A | US 4 050 307 A (MCMULLEN WILLARD C ET AL) 27.September 1977 * Spalte 3, Zeile 38 - Spalte 4, Zeile 21; Abbildung 4 * ----- | 1-3 | |

Der vorliegende Recherchenbericht wurde für alle Patentansprüche erstellt

| Recherchenort | Abschlußdatum der Recherche | Prüfer |
|---|---|---|
| DEN HAAG | 29.April 1997 | Bindon, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPO FORM 1503 03.82 (P04C03)